# EUROPÄISCHE PATENTANMELDUNG

(11) **EP 4 596 386 A1**
(43) Veröffentlichungstag der Anmeldung: **06.08.2025**
(21) Anmeldenummer: 25154415.1
(22) Anmeldetag: 28.01.2025
(51) Int. Cl.: B62M 6/45, B62M 6/55

(54) **VERFAHREN ZUM STEUERN EINES ANTRIEBSMOTORS EINES FAHRRADS**

(30) Priorität: 01.02.2024 DE 102024200919
(71) Anmelder: ZF Friedrichshafen AG, 88046 Friedrichshafen (DE)
(72) Erfinder: Freudenthaler, Gerhard, 88212 Ravensburg (DE); Rösch, Patrik, 88326 Aulendorf (DE); Strohm, Johannes, 88131 Lindau (DE)
(74) Vertreter: ZF Friedrichshafen AG

(57) **Zusammenfassung**

Die vorliegende Erfindung bezieht sich auf ein Verfahren zum Steuern eines Antriebsmotors eines Fahrrads. Der Antriebsmotor ist mittels eines Freilaufs mit einem Abtriebselement des Fahrrads mechanisch wirkverbindbar. Das Verfahren weist wenigstens die folgenden Schritte auf:
- Aktivieren (8) einer Schiebehilfe durch den Antriebsmotor;
- Bestimmen (10) eines variablen Solldrehzahlgradienten für den Antriebsmotor; und
- Steuern (12) des Antriebsmotors in Abhängigkeit von dem bestimmten variablen Solldrehzahlgradienten, um eine Motordrehzahl (22) an eine Synchrondrehzahl (20) des Freilaufs anzunähern. Zudem bezieht sich die Erfindung auf eine Steuervorrichtung und ein Fahrrad.

## Beschreibung

### Technisches Gebiet

Die vorliegende Erfindung bezieht sich auf ein Verfahren zum Steuern eines Antriebsmotors eines Fahrrads. Zudem bezieht sich die Erfindung auf eine Steuervorrichtung und ein Fahrrad.

### Stand der Technik

Moderne Fahrräder weisen häufig einen Antriebsmotor auf, um einen Benutzer beim Antreiben des Fahrrads zu unterstützen. Bekannt sind beispielsweise als Pedelecs ausgebildete Fahrräder. Dabei erfolgt eine Unterstützung nur, wenn der Benutzer pedaliert. Wenn der Benutzer dagegen das Pedalieren stoppt, wird auch die Unterstützung durch den Antriebsmotor gestoppt. Damit eine Massenträgheit des Antriebsmotors dabei nicht zu einem unerwünschten Antreiben einer Tretkurbelwelle führt, ist beispielsweise eine Rotation einer Motorwelle und der Tretkurbelwelle durch einen Freilauf entkoppelbar.

Damit der Antriebsmotor beim Anschieben des Fahrrads unterstützen kann, muss der Antriebsmotor mit seiner Drehzahl an eine Drehzahl der Laufräder angepasst werden. Ein solches Nachführen ist jedoch schwierig, da Benutzer von Fahrrädern häufig ungleichmäßig anschieben und generell eine Schiebegeschwindigkeit häufig wechselt.

Deshalb kann es bei einem Einspuren des Antriebsmotors auf die Drehzahl der Laufräder bei einem Anschieben, um den Freilauf zu schließen, zu unerwünschten Effekten kommen. Wenn eine Synchronisierung des Antriebsmotors mit einer Schiebegeschwindigkeit zu lange dauert, kann der Benutzer eine Leistungsfähigkeit des Antriebsmotors in Frage stellen. Zudem ist dann beispielsweise für einen Großteil eines Anfahrvorgangs ein Antreiben rein mit Muskelkraft erforderlich, was bei körperlich beeinträchtigen Personen oder schweren Lastenrädern eine Benutzung des Fahrrads trotz motorischer Unterstützung zu anstrengend machen kann. Wenn eine Synchronisierung des Antriebsmotors mit einem Anschieben zu schnell erfolgt, kann es zu einem schlagartigen Einspuren kommen. Dadurch können laute Geräusche verursacht werden und Bauteile eines Antriebsstrangs des Fahrrads übermäßig belastet werden. Zudem kann es dann zu einem für den Benutzer spürbaren und damit gegebenenfalls unangenehmen Ruck kommen.

Aufgabe der vorliegenden Erfindung ist es, eine verbesserte Steuerung bei einem Antriebsmotor von einem Fahrrad zu ermöglichen. Diese Aufgabe wird durch die Gegenstände der nebengeordneten Patentansprüche gelöst.

### Darstellung der Erfindung

Ein erster Aspekt betrifft ein Verfahren zum Steuern eines Antriebsmotors eines Fahrrads. Ein Fahrrad kann beispielsweise als Mountainbike, Stadtrad oder Lastenrad ausgebildet sein. Ein Fahrrad weist beispielsweise zwei Laufräder auf. Das Fahrrad kann mittels einer Tretkurbelwelle durch einen Benutzer antreibbar sein. Der Benutzer kann beispielsweise ein Fahrradfahrer sein. An der Tretkurbelwelle können an jedem axialen Ende ein Kurbelarm drehfest befestigt sein. An den Kurbelarmen kann jeweils ein Pedal drehbar befestigt sein. Der Benutzer kann so beispielsweise durch Pedalieren das Fahrrad antreiben oder auch durch ein Drücken gegen einen Lenker bei einem Schieben. Der Antriebsmotor des Fahrrads kann als Elektromotor ausgebildet sein. Der Antriebsmotor kann beispielsweise in einem Tretlagerbereich angeordnet sein. Der Antriebsmotor kann eine Motorwelle aufweisen. Der Antriebsmotor kann dazu ausgebildet sein, den Benutzer beim Antreiben des Fahrrads und auch Anschieben des Fahrrads zu unterstützen. Das Fahrrad kann als Pedelec ausgebildet sein.

Der Antriebsmotor ist mittels eines Freilaufs mit einem Abtriebselement des Fahrrads mechanisch wirkverbindbar. Das Abtriebselement kann beispielsweise als Laufrad ausgebildet sein. Ein Freilauf kann eine Kupplung sein, welche selbsttätig zwischen einem Sperrzustand und einem Freigabezustand in Abhängigkeit von einer relativen Drehrichtung von zwei Freilaufelementen zueinander wechseln kann. Der Freilauf kann eine Kupplung sein, welche nur in eine Drehrichtung ein Drehmoment überträgt und in einer anderen Drehrichtung einen freien Lauf zulässt. In dem Freigabezustand können die beiden Freilaufelemente relativ zueinander rotieren. Die beiden Freilaufelemente können so entkoppelt sein und es wird beispielsweise kein Drehmoment über den Freilauf übertragen. In dem Sperrzustand sind die beiden Freilaufelemente drehfest miteinander verbunden. Die beiden Freilaufelemente können so gekoppelt sein und es kann beispielsweise ein Drehmoment über den Freilauf übertragen werden. Beispiele für einen Freilauf sind ein Sperrklinkenfreilauf und eine Schlingfederkupplung.

Der Antriebsmotor kann beispielsweise mittels des Freilaufs direkt mit dem Abtriebselement mechanisch wirkverbindbar sein. Eine mechanische Wirkverbindung kann eine rotatorische Kopplung von zwei Elementen sein, optional über weitere Drehelemente, wie Wellen und Zahnräder. Die Tretkurbelwelle kann mittels eines Freilaufs mit dem Abtriebselement des Fahrrads mechanisch wirkverbindbar sein. Dabei kann es sich um den gleichen Freilauf handeln, welcher dann sowohl den Antriebsmotor als auch die Tretkurbelwelle mit dem Abtriebselement verbindet. Es kann sich aber auch um einen weiteren Freilauf handeln. Über die Tretkurbelwelle kann der Antriebsmotor mit dem Abtriebselement mechanisch wirkverbindbar oder wirkverbunden sein.

Das Verfahren weist einen Schritt eines Aktivierens einer Schiebehilfe durch den Antriebsmotor auf. Die Aktivierung kann beispielsweise mittels eines Bedienelements an dem Fahrrad, wie einem Wählhebel oder einem Touchscreen erfolgen. Die Schiebehilfe kann unterschiedlich starke Unterstützungsmodi aufweisen, welche ebenfalls auswählbar sein können. Bei aktivierter Schiebehilfe treibt der Antriebsmotor das Fahrrad zumindest geringfügig an, beispielsweise auch wenn der Benutzer nicht in die Pedale tritt. Dadurch kann der Benutzer bei dem Schieben des Fahrrads unterstützt werden, beispielsweise an einem Gefälle. Die Schiebegeschwindigkeit kann dabei fest vorgegeben sein oder beispielsweise in Abhängigkeit von einer Zustandsgröße wie einer Schiebekraft eingestellt werden. Das Aktivieren kann auch durch ein externes Bediengerät erfolgen, beispielsweise ein mit dem Antriebsstrang verbundenes Smartphone oder eine mit dem Antriebsstrang verbundene Smartwatch. Die Verbindung zur Übertragung einer Auswahl kann beispielsweise kabellos, beispielsweise über Bluetooth, erfolgen. Die Aktivierung der Schiebehilfe kann beispielsweise an eine Steuervorrichtung übertragen werden, welche den Antriebsmotor steuert. Beispielsweise kann durch den Schiebhilfemodus und die gewählte Unterstützungsstufe eine oder mehrere Motorsteuerkennlinien ausgewählt werden. Beispielsweise kann bei einer ersten Unterstützungsstufe der Benutzer beim Anschieben des Fahrrads stärker unterstützt werden als bei einer zweiten Unterstützungsstufe. Beispielsweise können durch die Unterstützungsstufen alternativ oder zusätzlich auch unterschiedliche Schiebegeschwindigkeiten mit Motorunterstützung vorgegeben werden.

Das Verfahren weist einen Schritt eines Bestimmens eines variablen Solldrehzahlgradienten für den Antriebsmotor auf, beispielsweise bei der aktivierten Schiebehilfe. Ein Drehzahlgradient kann eine Änderungsrate einer Drehzahl sein. Der Drehzahlgradient des Antriebsmotors kann zu einer Beschleunigung durch den Antriebsmotor korrespondieren. Eine Solldrehzahl kann eine gewünschte Drehzahl beim Betrieb des Antriebsmotors sein. Ein Solldrehzahlgradient kann ein gewünschter Drehzahlgradient beim Betrieb des Antriebsmotors sein. Der Solldrehzahlgradient kann eine gewünschte Beschleunigung durch den Antriebsmotor sein, bevor der Freilauf greift und ein Drehmoment von dem Antriebsmotor an das Abtriebselement übertragbar ist. Ein variabler Solldrehzahlgradient kann ein Solldrehzahlgradient sein, welcher sich bei dem Annähern an eine Synchrondrehzahl ändert. Während eines Einspurens können für den variablen Solldrehzahlgradient wenigstens zwei Werte bestimmt werden. Beispielsweise wird für einen ersten Zeitraum ein erster Wert für den Solldrehzahlgradient und für einen zweiten Zeitraum ein zweiter Wert für Solldrehzahlgradient bestimmt. Je nach gewählter Unterstützungsstufe für die Schiebehilfe können sich diese Werte für den variablen Solldrehzahlgradienten unterscheiden. Beispielsweise wird für den ersten Zeitraum ein erster Wert für den Solldrehzahlgradient und für den zweiten Zeitraum ein zweiter Wert für Solldrehzahlgradient bestimmt, wenn die erste Unterstützungsstufe für die Schiebehilfe ausgewählt ist. Beispielsweise wird für den ersten Zeitraum ein dritter Wert für den Solldrehzahlgradient und für den zweiten Zeitraum ein vierter Wert für Solldrehzahlgradient bestimmt, wenn die zweite Unterstützungsstufe für die Schiebehilfe ausgewählt ist. Der erste Wert und der dritte Wert können sich beispielsweise unterscheiden. Der zweite Wert und der vierte Wert können sich beispielsweise unterscheiden. Beispielsweise kann bei der ersten Unterstützungsstufe schneller bzw. mit höheren Werten für den Solldrehzahlgradienten eingespurt werden als bei der zweiten Unterstützungsstufe. Für jeden Unterstützungsstufe können die jeweiligen Werte für den variablen Solldrehzahlgradienten fest vorgegeben sein oder beispielsweise in Abhängigkeit von anderen Kenngrößen unterschiedlich bestimmt werden.

Das Verfahren weist einen Schritt eines Steuerns des Antriebsmotors in Abhängigkeit von dem bestimmten variablen Solldrehzahlgradienten, um eine Motordrehzahl an eine Synchrondrehzahl des Freilaufs anzunähern, beispielsweise während des Schiebens mit aktivierter Schiebehilfe. Beispielsweise wird der Antriebsmotor zunächst in Abhängigkeit von dem ersten Wert des Solldrehzahlgradienten und dann in Abhängigkeit von dem zweiten Wert des Solldrehzahlgradienten gesteuert. Die Motordrehzahl kann eine Drehzahl einer Motorwelle des Antriebsmotors sein. Die Synchrondrehzahl kann eine erforderliche Drehzahl sein, damit beide Elemente des Freilaufs mit der gleichen Winkelgeschwindigkeit rotieren. Die Synchrondrehzahl kann einer Solldrehzahl des Antriebsmotors entsprechen, bei welcher im derzeitigen Fahrzustand der Freilauf sperrt. Beispielsweise kann die Synchrondrehzahl der derzeitigen Drehzahl eines Hinterrads unter Berücksichtigung einer Übersetzung zwischen der Motorwelle und dem Freilauf entsprechen. Beispielsweise kann eine Motordrehzahl oder ein Motordrehmoment in Abhängigkeit von dem bestimmten Solldrehzahlgradienten gesteuert werden. Beispielsweise kann dafür eine Stromversorgung des Antriebsmotors entsprechend durch einen Inverter eingestellt werden.

Die Synchrondrehzahl kann beispielsweise in Abhängigkeit von einer durch einen Drehzahlsensor erfassten Drehzahl bestimmt werden. Der Drehzahlsensor kann beispielsweise eine Drehzahl eines angetriebenen bzw. antreibbaren Laufrads, wie die Drehzahl eines Hinterrads erfassen. Alternativ kann die Synchrondrehzahl auch beispielsweise anhand einer durch ein Navigationssystem erfassten Schiebegeschwindigkeit berechnet werden. Auch eine Schätzung kann möglich sein. Beispielsweise kann eine derzeitige Übersetzung für die Bestimmung der Synchrondrehzahl berücksichtigt werden. Diese Übersetzung kann beispielsweise erfasst werden. Dafür kann beispielsweise ein eingelegter Gang erfasst werden. Sofern eine Gangschaltung des Fahrrads selbsttätig oder elektronisch schaltend ist, kann ein derzeit gewählter Gang bereits durch ein Steuersignal bekannt sein. Die derzeitige Übersetzung bzw. ein derzeitig eingelegter Gang kann auch geschätzt werden, beispielsweise anhand eines vorhergehenden Fahrens mit dem Fahrrad oder anhand vorhergehender Einspurvorgänge. Beispielsweise kann sich die Schiebegeschwindigkeit häufig ändern, sodass anhand eines zuvor vorhergehenden Beschleunigens auf die Synchrondrehzahl eine derzeitige Übersetzung ermittelt werden kann.

Dem Antriebsmotor wird zum Einspuren mit dem Freilauf beispielsweise nicht eine feste Beschleunigung vorgegeben, sondern es kann eine Beschleunigung in Abhängigkeit von Zustandsgrößen während der aktivierten Schiebehilfe bestimmt werden. Während des Einspurens kann sich eine Vorgabe für die Beschleunigung ändern und der Fahrer kann die Form der Bestimmung durch Auswahl der Unterstützungsstufe modifizieren. Dadurch kann ein komfortableres und alternativ oder zusätzlich schnelleres Synchronisieren des Antriebsmotors mit dem Freilauf erreicht werden, welche zudem bedarfsgerecht durch den Fahrer einstellbar ist. So kann beispielsweise zunächst stark mit dem Antriebsmotor beschleunigt werden, um die Motordrehzahl schnell anzupassen. Bei größerer Annäherung an eine Drehzahl, bei welcher der Freilauf greift und Drehmoment von dem Antriebsmotor an das Abtriebselement übertragen wird, kann die Beschleunigung verringert werden, um ein ruckartiges Einspuren zu vermeiden. Je nach beispielsweise einer gewählten Unterstützungsstufe kann diese Beschleunigung modifiziert werden. Insgesamt kann so schnell eine Unterstützung durch den Antriebsmotor bereitgestellt werden und trotzdem starke Stöße in einem Antriebsstrang des Fahrrads vermieden werden.

Das Verfahren wird beispielsweise gestartet, wenn ein Benutzer das Fahrrad in Vorwärtsfahrtrichtung bewegt, beispielsweise durch ein Anschieben. Optional muss eine Mindestdrehzahl durch das Laufrad und alternativ oder zusätzlich eine Mindestfahrgeschwindigkeit erreicht werden, bevor das Verfahren gestartet wird. Optional muss das Verfahren durch einen Benutzer freigegeben werden, beispielsweise indem eine Unterstützungsstufe ausgewählt und alternativ oder zusätzlich aktiviert wird. Es kann aber auch einfache ein Aktivieren der Schiebehilfe ausreichend sein. Es kann aber auch bei einem Einschalten des Fahrrads oder Antriebsmotors selbsttätig die Schiebehilfe automatisch ausgewählt werden. Ein Schieben des Fahrrads kann auch erkannt werden und dann automatisch die Schiebehilfe aktiviert werden. Das Annähern gemäß dem Steuerverfahren kann bis zum Erreichen der Synchrondrehzahl oder kurz davor erfolgen. Vor oder bei Erreichen der Synchrondrehzahl kann das Verfahren beendet werden kann. Dann kann eine klassische Folgeregelung für die Steuerung des Antriebsmotors genutzt werden. Ein Abbruchkriterium für das Verfahren kann beispielsweise das Erreichen der Synchrondrehzahl sein oder eines Schwellwerts, welcher unterhalb der Synchrondrehzahl liegt. Dieser Schwellwert kann beispielsweise einen fest vorgegebenen Abstand zu der Synchrondrehzahl haben. Der Abstand des Schwellwerts zu der Synchrondrehzahl kann auch in Abhängigkeit von der Synchrondrehzahl vorgegeben werden. Beispielsweise kann bei 98% der Synchrondrehzahl das Verfahren bzw. die entsprechende Steuerung des Antriebsmotors beendet werden. Das Verfahren kann auch beendet werden, wenn der Sollgradient nicht mehr gehalten werden kann. Dies ist beispielsweise der Fall, wenn der Freilauf greift bzw. in seinen Sperrzustand wechselt. Entsprechend kann so erkannt werden, dass durch die Motordrehzahl die Synchrondrehzahl erreicht wurde. Auch eine Überschreitung eines anderen Schwellwerts durch ein Motordrehmoment oder durch einen induzierten Strom kann ein erfolgreiches Einspuren indizieren, wobei dann in Reaktion das Verfahren beendet werden kann. Ebenso kann beispielsweise auch sensorisch ein erfolgreiches Einspuren an dem Freilauf erkannt werden und in Reaktion die Steuerung des Antriebsmotors gemäß dem Verfahren abgebrochen werden.

In einer weiteren Ausführungsform des Verfahrens kann es vorgesehen sein, dass der Freilauf in einer Nabe eines Laufrads des Fahrrads angeordnet ist. Der Freilauf kann beispielsweise ein Rollen mit dem Fahrrad erlauben, ohne dass die Tretkurbelwelle und alternativ oder zusätzlich eine Motorwelle durch das Laufrad angetrieben werden. Das Laufrad kann beispielsweise ein Hinterrad des Fahrrads sein. Die Nabe bzw. der Freilauf können beispielsweise mit dem Antriebsmotor über eine Kette oder ein Riemen mechanisch wirkverbunden sein. Die Übersetzung zwischen Antriebsmotor und Freilauf kann einstellbar sein, beispielsweise durch eine Gangschaltung des Fahrrads.

Das Fahrrad kann beispielsweise einen Freilauf für eine Entkopplung des Antriebsmotors aufweisen. Mit diesem Freilauf kann beispielsweise ein freies Rückwärtsdrehen des Antriebsmotors ermöglicht werden. Das Fahrrad kann einen Freilauf für eine Entkopplung der Tretkurbelwelle aufweisen. Mit diesem Freilauf kann beispielsweise ein freies Rückwärtsdrehen der Tretkurbelwelle ermöglicht werden. Das Fahrrad kann einen Freilauf in der Nabe des angetriebenen Laufrads aufweisen. Dadurch kann das Fahrrad rollen, ohne das weitere Bauteile, wie beispielsweise bei einem Fixie-Fahrrad, mitgenommen werden. Das Fahrrad kann alle drei Freiläufe aufweisen oder beispielsweise nur zwei dieser Freiläufe. Dann können der Antriebsmotor und die Tretkurbelwelle beispielsweise nicht unabhängig voneinander entkoppelt werden. Sofern sich der Antriebsmotor dreht erfolgt auch ein Drehen der Tretkurbelwelle und umgekehrt. Bei aktivierter Schiebehilfe wird beispielsweise in zwei der Freiläufe oder auch nur in den Freilauf des angetriebenen Laufrads eingespurt. Sofern das Fahrrad bereits geschoben wird und die Schiebehilfe aktiviert wird, wird der Antriebsmotor beispielsweise instant in den Freilauf zum Entkoppeln des Antriebsmotors eingespurt und wird dann auf eine Drehzahl des Hinterrads bzw. auf den Hinterradeinlauf eingespurt. Dabei werden beispielsweise auch die Kette und Kassette eingespurt. Bei einem normalen Fahren mit dem Fahrrad wird bei Aktivierung einer Unterstützung dagegen beispielsweise in den Freilauf zur Entkopplung der Tretkurbelwelle eingespurt, da schon eine PedalBewegung vom Fahrer eingeleitet wird. Bei dem normalen Fahren muss der Antriebsmotor beispielsweise mit der Tretkurbel synchronisiert werden. Beim Schieben des Fahrrads wird dagegen nicht pedaliert und die Tretkurbelwelle befindet sich im Idealfall in Ruhe. Allerdings kann die Tretkurbelwelle aufgrund von Reibung auch mitgeschliffen werden, obwohl der zugeordnete Freilauf entkoppelt. Die Tretkurbelwelle kann dann aber mit wenig Kraftaufwand gestoppt werden. Bei Fahrrädern mit nur zwei Freiläufen wird die Tretkurbelwelle durch den Antriebsmotor bei aktivierter Schiebehilfe aber beispielsweise mitgeschliffen.

In einer weiteren Ausführungsform des Verfahrens kann es vorgesehen sein, dass das Bestimmen des variablen Solldrehzahlgradienten in Abhängigkeit von einem Vergleich der Motordrehzahl mit der Synchrondrehzahl erfolgt. Ein Ergebnis des Vergleichs kann eine Differenz sein. Beispielsweise wird bei einer hohen Differenz zwischen der Synchrondrehzahl und der Motordrehzahl ein hoher Solldrehzahlgradient bestimmt. So kann beispielsweise anfänglich stark durch den Antriebsmotor beschleunigt werden, ohne dass es ein Risiko eines ruckartigen Einspurens gibt. Das Einspuren kann so besonders schnell sein. Bei einer hohen Differenz zwischen der Synchrondrehzahl und der Motordrehzahl wird beispielsweise ein kleiner Solldrehzahlgradient bestimmt. Dadurch kann sich an die Synchrondrehzahl mit geringer Beschleunigung am Ende des Einspurens angenähert werden. Dadurch kann ein ruckartiges Einspuren, wie dies bei einer Beschleunigung des Antriebsmotors mit festem Drehzahlgradient oft der Fall ist, vermieden werden.

Das Verfahren kann einen Schritt eines Bestimmens der Synchrondrehzahl aufweisen. Dafür kann beispielsweise eine Drehzahl des Laufrads erfasst werden. Die Synchrondrehzahl kann in Abhängigkeit von der Drehzahl des Laufrads und optional einer Übersetzung zwischen dem Antriebsmotor und dem Freilauf bestimmt werden. Die Übersetzung kann fest sein oder beispielsweise durch einen gewählten Gang vorgegeben sein. Die Drehzahl des Laufrads kann einer Schiebegeschwindigkeit entsprechen.

Der variable Solldrehzahlgradient kann beispielsweise nicht zum Steuern des Antriebsmotors genutzt werden, wenn die Schiebegeschwindigkeit bzw. die Synchrondrehzahl null ist. Dann wird statt des variablen Solldrehzahlgradienten beispielsweise ein fest vorgegebener Solldrehzahlgradienten zum Steuern des Antriebsmotors genutzt. Beispielsweise wird das Verfahren bei einer Schiebegeschwindigkeit bzw. Synchrondrehzahl von null ausgesetzt. Das Steuern kann in diesem Fall besonders einfach sein. Im Stillstand des Fahrrads sind beispielsweise alle Bauteile des Antriebsstrangs des Fahrrads in Ruhe. Dann kann der Antriebsmotor quasi instantan in den Freilauf für die Entkopplung des Antriebsmotors und in den Freilauf des angetriebenen Laufrads eingespurt werden.

Das Verfahren und der variable Solldrehzahlgradient kann beispielsweise aber auch genutzt werden, wenn die Schiebegeschwindigkeit bzw. die Synchrondrehzahl null ist. Auch dann kann der Solldrehzahlgradient als variabler Solldrehzahlgradient bestimmt werden, beispielsweise Abhängigkeit von einem Vergleich der Motordrehzahl mit der Synchrondrehzahl oder anderen Bedingungen. Dann kann beispielsweise auf einen Moduswechsel und alternativ oder zusätzlich eine Erkennung, ob das Fahrrad stillsteht oder nicht, verzichtet werden.

In einer weiteren Ausführungsform des Verfahrens kann es vorgesehen sein, dass das Bestimmen des variablen Solldrehzahlgradienten in Abhängigkeit von wenigstens einem Schieben des Fahrrads durch einen Benutzer erfolgt. Dadurch kann ein Schiebverhalten des Benutzers beim Einspuren des Antriebsmotors berücksichtigt werden.

Beispielsweise kann bei einem schnellen Anschieben des Fahrrads durch den Benutzer mit einem größeren Drehzahlgradienten durch den Antriebsmotor beschleunigt werden als bei einem langsamen Anschieben des Fahrrads. Dadurch kann ein Fahrerwunsch auch beim Synchronisieren des Antriebsmotors berücksichtigt werden. So kann bei einer hohen Schiebedynamik durch den Benutzer die Unterstützung ausreichend schnell greifen. Dabei kann dann beispielsweise auch hingenommen werden, dass es zu einem stärkeren Rucken im Antriebsstrang kommt. Bei einer gemäßigteren Schiebeweise kann dagegen ein Schiebkomfort und ein Schonen der Bauteile des Antriebsstrangs stärker priorisiert werden.

Beispielsweise kann das Schieben des Fahrrads eine oder mehrere Betätigungskenngrößen aufweisen, wie ein Druck gegen einen Lenker des Fahrrads bzw. eine aufgebrachte Schiebekraft. Es kann sich auch um Ableitungen bzw. Gradienten von Kenngrößen handeln, wie einem Schubkraftgradienten. Dadurch kann auch eine Beschleunigung durch den Benutzer beim Anschieben berücksichtigt werden und nochmals schneller eingespurt werden. Beispielsweise kann so auch sichergestellt werden, dass der variable Solldrehzahlgradient für den Antriebsmotor größer als ein Drehzahlgradient der Synchrondrehzahl ist. Der Drehzahlgradient der Synchrondrehzahl kann dabei zu dem Drehzahlgradienten des Laufrads korrespondieren, beispielsweise unter Berücksichtigung jeweiliger Übersetzungen zwischen dem Freilauf und der Motorwelle. Das Schieben kann zu einem Fahrerwunsch und einer gewünschten Schiebeweise korrespondieren. Das Verfahren kann einen Schritt eines Erfassens des Schiebens aufweisen, beispielsweise mittels eines Kraftsensors an dem Lenker des Fahrrads.

Die Bestimmung des variablen Solldrehzahlgradienten kann in Abhängigkeit von dem Vergleich der Motordrehzahl mit der Synchrondrehzahl und in Abhängigkeit von dem Schieben des Fahrrads erfolgen. Es kann sich ein Kennfeld für die Bestimmung des Solldrehzahlgradienten ergeben, bei welcher zwei Kenngrößen berücksichtigt werden. Je nach gewählter Unterstützungsstufe können dabei unterschiedliche Kennfelder vorgesehen sein.

In einer weiteren Ausführungsform des Verfahrens kann es vorgesehen sein, dass die Betätigung ein durch den Benutzer aufgebrachte Schiebekraft aufweist. Die Schiebekraft kann die einzige Kenngröße des Schiebens sein, welche zur Bestimmung des variablen Solldrehzahlgradienten berücksichtigt wird. Es können aber auch weitere Kenngrößen, wie ein Schiebkraftgradient, berücksichtigt werden.

In einer weiteren Ausführungsform des Verfahrens kann es vorgesehen sein, dass das Steuern des Antriebsmotors in Abhängigkeit von dem variablen Solldrehzahlgradienten einen Vergleich eines Istdrehzahlgradienten des Antriebsmotors und dem variablen Solldrehzahlgradienten aufweist. Dadurch kann eine Regelung für den Solldrehzahlgradienten bereitgestellt werden. Damit kann der Antriebsmotor besonders präzise für ein Folgen des variablen Solldrehzahlgradienten gesteuert werden. Das Verfahren kann einen Schritt eines Bestimmens eines Istdrehzahlgradienten aufweisen. Der Istdrehzahlgradient kann ein derzeitiger Drehzahlgradient des Antriebsmotors sein. Das Verfahren kann einen Schritt eines Vergleichs des Istdrehzahlgradienten des Antriebsmotors mit dem variablen Solldrehzahlgradienten aufweisen. Ein Ergebnis des Vergleichs kann eine Differenz sein. Beispielsweise wird der Antriebsmotor in Abhängigkeit von der Differenz zwischen dem Istdrehzahlgradienten des Antriebsmotors und dem variablen Solldrehzahlgradienten gesteuert. Beispielsweise kann so ein Motordrehmoment oder eine Motordrehzahl in Abhängigkeit von dem Ergebnis des Vergleichs geregelt werden. Beispielsweise kann dann entsprechend ein Motorstrom geregelt werden und alternativ oder zusätzlich ein erforderliches Drehmoment oder eine erforderliche Drehzahl für den Motor vorgegeben werden. Die Bestimmung des Istdrehzahlgradienten kann durch ein sensorisches Erfassen erfolgen oder auch von einer Steuergröße oder Zustandsgröße des Antriebsmotors abgeleitet werden, wie beispielsweise einer Stromversorgung des Antriebsmotors.

In einer weiteren Ausführungsform des Verfahrens kann es vorgesehen sein, dass das Steuern des Antriebsmotors in Abhängigkeit von dem variablen Solldrehzahlgradienten ein Vorgeben eines Motordrehmoments in Abhängigkeit von dem variablen Solldrehzahlgradienten aufweist. Dies kann eine Vorsteuerung für den Antriebsmotor sein. Dieses Vorgeben kann unabhängig von einem Vergleich des Istdrehzahlgradienten des Antriebsmotors und dem variablen Solldrehzahlgradienten erfolgen. Beispielsweise kann der Antriebsmotor vorgesteuert werden. Beispielsweise kann dem Antriebsmotor ein Solldrehmoment in Abhängigkeit von dem derzeitigen Wert des variablen Solldrehzahlgradienten vorgegeben werden. Diese Vorgabe kann beispielsweise auf Basis einer Tabelle erfolgen. Die Vorgabe kann beispielsweise auch linear zu dem Solldrehzahlgradienten korrespondieren. Die Vorgabe kann unabhängig von einem tatsächlichen Istdrehzahlgradienten erfolgen. Beispielsweise kann die Vorgabe zu einer bestimmten Stromversorgung des Antriebsmotors korrespondieren. Dadurch kann eine besonders schnelle Steuerung ermöglicht werden. Zudem kann so eine besonders schnelle Annäherung an den derzeitigen Wert des variablen Solldrehzahlgradienten und alternativ oder zusätzlich an die Synchrondrehzahl ermöglicht werden. Je nach tatsächlich anliegender Last, beispielsweise aufgrund einer Zuladung, kann eine so tatsächlich erreichter Drehzahlgradient von der Vorgabe abweichen.

Die Vorsteuerung und die Regelung können auch kombiniert werden. Beispielsweise kann ein Drehmoment für den Antriebsmotor in Abhängigkeit von dem variablen Solldrehzahlgradienten vorgegeben werden. Beispielsweise kann das Drehmoment oder die Drehzahl linear mit dem variablen Solldrehzahlgradienten korrespondieren. Zusätzlich kann dieses Drehmoment mit einem weiteren Drehmoment, welches in Abhängigkeit von einem Vergleich des Istdrehzahlgradienten des Antriebsmotors und dem variablen Solldrehzahlgradienten bestimmt wird, kombiniert werden. Beispielsweise kann das weitere Drehmoment zu dem Drehmoment der Vorsteuerung addiert werden, wobei das weitere Drehmoment linear zu der Differenz aus Istdrehzahlgradient und variablen Solldrehzahlgradient korrespondieren kann. So kann zunächst eine sehr schnelle Annäherung an den Solldrehzahlgradient und alternativ oder zusätzlich an die Synchrondrehzahl erfolgen und dann ein endgültiges Einspuren sehr sanft erfolgen.

Das Steuern des Antriebsmotors kann eine reine Vorsteuerung sein. Zu dem derzeitigen bestimmten Wert des variablen Solldrehzahlgradienten kann beispielsweise eine Stromversorgung oder ein Motormoment korrespondieren, mit welchem der Antriebsmotor gesteuert wird. Dafür kann beispielsweise ein tabellarischer Zusammenhang hinterlegt sein. Eine solche Steuerung kann einfach und robust sein. Alternativ oder zusätzlich kann das Steuern des Antriebsmotors eine Drehzahlgradientenregelung aufweisen. Dabei wird der derzeitige bestimmte Wert des variablen Solldrehzahlgradienten mit einem derzeitigen Istdrehzahlgradienten verglichen. In Abhängigkeit davon wird das Motormoment bzw. die Stromversorgung des Antriebsmotors vorgegeben.

Damit kann der gewünschte Solldrehzahlgradient präzise eingehalten werden. Bei der Kombination mit der Vorsteuerung kann der gewünschte Solldrehzahlgradient durch den Antriebsmotor besonders schnell erreicht werden. In einer weiteren Variante wird bei der Vorsteuerung noch eine Ableitung des Solldrehzahlgradienten berücksichtigt. Beispielsweise wird eine Änderungsrate des variablen Solldrehzahlgradienten bestimmt. Zu dem derzeitigen bestimmten Wert der Änderungsrate des variablen Solldrehzahlgradienten kann beispielsweise eine Stromversorgung oder ein Motormoment korrespondieren, mit welchem der Antriebsmotor gesteuert wird. Die verschiedenen Größen für die Stromversorgung oder das Motormoment können bei den verschiedenen Varianten beispielsweise additiv kombiniert werden.

Ein zweiter Aspekt betrifft eine Steuervorrichtung für einen Antriebsmotor eines Fahrrads. Der Antriebsmotor kann mittels eines Freilaufs mit einem Abtriebselement des Fahrrads mechanisch wirkverbindbar sein. Die Steuervorrichtung kann dazu ausgebildet sein, das Verfahren gemäß dem ersten Aspekt durchzuführen. Jeweilige weitere Merkmale, Ausführungsformen und Vorteile sind den Beschreibungen des ersten Aspekts zu entnehmen. Umgekehrt stellen auch Merkmale, Ausführungsformen und Vorteile des zweiten Aspekts Merkmale, Ausführungsformen und Vorteile des ersten Aspekts dar. Die Steuervorrichtung kann beispielsweise einen Mikroprozessor aufweisen. Die Steuervorrichtung kann als ein Inverter ausgebildet sein. Die Steuervorrichtung kann dazu ausgebildet sein, einen variablen Solldrehzahlgradienten für den Antriebsmotor zu bestimmen und den Antriebsmotor in Abhängigkeit von dem bestimmten Solldrehzahlgradienten zu steuern, um eine Motordrehzahl an eine Synchrondrehzahl des Freilaufs anzunähern, wenn eine Schiebehilfe aktiviert ist. Die Steuervorrichtung kann dazu ausgebildet sein, Sensorsignale von Sensoren des Fahrrads zu empfangen. Die Steuervorrichtung kann dazu ausgebildet sein, eine Stromversorgung des Antriebsmotors zu steuern.

Ein weiterer Aspekt betrifft einen Antriebsstrang für ein Fahrrad mit einer Steuervorrichtung, einem Antriebsmotor und einem Abtriebselement. Die Steuervorrichtung kann als Steuervorrichtung gemäß dem zweiten Aspekt ausgebildet sein. Jeweilige weitere Merkmale, Ausführungsformen und Vorteile sind den Beschreibungen des zweiten Aspekts zu entnehmen. Umgekehrt stellen auch Merkmale, Ausführungsformen und Vorteile des weiteren Aspekts Merkmale, Ausführungsformen und Vorteile des zweiten Aspekts dar. Der Antriebsstrang kann eine Sensorvorrichtung aufweisen. Die Sensorvorrichtung kann dazu ausgebildet sein, zuvor beschriebene Zustandsgrößen zu erfassen. Beispielsweise kann die Sensorvorrichtung dazu ausgebildet sein, eine Schiebkraft zu erfassen. Dafür kann die Sensorvorrichtung einen Drucksensor aufweisen.

Ein dritter Aspekt betrifft ein Fahrrad. Das Fahrrad weist einen Antriebsmotor, ein Abtriebselement und einen Freilauf auf. Der Antriebsmotor ist mittels des Freilaufs mit dem Abtriebselement des Fahrrads mechanisch wirkverbindbar. Zudem weist das Fahrrad eine Steuervorrichtung auf. Die Steuervorrichtung kann als Steuervorrichtung gemäß dem zweiten Aspekt ausgebildet sein. Jeweilige weitere Merkmale, Ausführungsformen und Vorteile sind den Beschreibungen des zweiten Aspekts zu entnehmen. Umgekehrt stellen auch Merkmale, Ausführungsformen und Vorteile des dritten Aspekts Merkmale, Ausführungsformen und Vorteile des zweiten Aspekts dar. Die Steuervorrichtung kann dazu ausgebildet sein, einen variablen Solldrehzahlgradienten für den Antriebsmotor in Abhängigkeit und den Antriebsmotor in Abhängigkeit von dem bestimmten variablen Solldrehzahlgradienten zu steuern, um eine Motordrehzahl an eine Synchrondrehzahl des Freilaufs anzunähern, wenn eine Schiebehilfe aktiviert ist. Die Steuervorrichtung kann die Aktivierung der Schiebehilfe von einem Bedienelement des Fahrrads empfangen, an welchem die Schiebehilfe von einem Benutzer aktivierbar ist. Das Fahrrad kann auch den zuvor beschriebenen Antriebsstrang und alternativ oder zusätzlich die zuvor beschriebene Sensorvorrichtung aufweisen.

### Kurze Beschreibung der Figuren

Fig. 1 veranschaulicht schematisch ein Verfahren zum Steuern eines Antriebsmotors eines Fahrrads, um eine Motordrehzahl an eine Synchrondrehzahl eines Freilaufs anzunähern.
Fig. 2 veranschaulicht in einem Diagramm einen Verlauf der Synchrondrehzahl und der Motordrehzahl, wobei der Motor mit dem Verfahren gemäß Fig. 1 gesteuert wird.
Fig. 3 veranschaulicht in einem Diagramm ein Antriebsmoment durch den Benutzer und ein Motormoment für den in Fig. 2 veranschaulichten Verlauf der Motordrehzahl.
Fig. 4 veranschaulicht in einem Diagramm den zu in Fig. 2 veranschaulichten Verlauf der Motordrehzahl und der Synchrondrehzahl korrespondierenden Zustand des Freilaufs.

### Detaillierte Beschreibung von Ausführungsformen

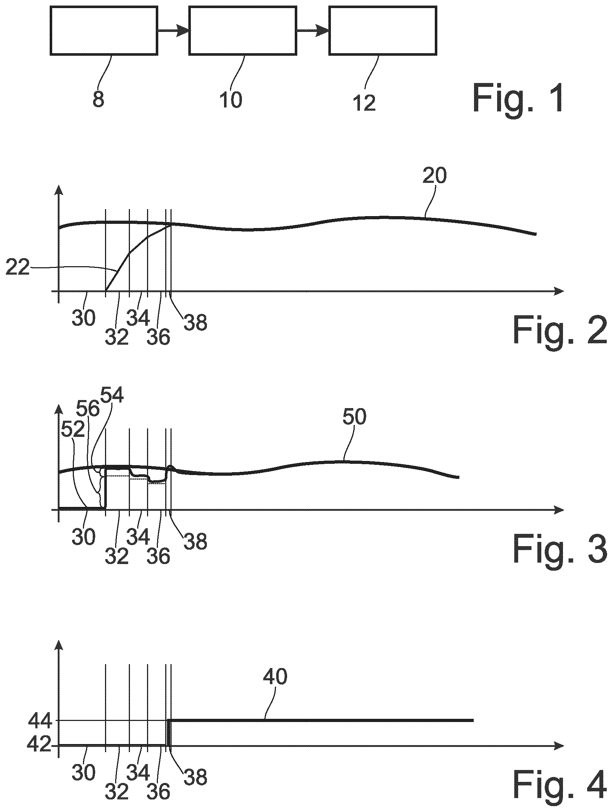

Fig. 1 veranschaulicht ein Verfahren zum Steuern eines Antriebsmotors eines Fahrrads. Das hier beschriebene Beispiel basiert auf einer Drehmomentsteuerung des Antriebsmotors, wobei in anderen Ausführungsformen das Verfahren auf einer Drehzahlsteuerung basiert. Der Antriebsmotor ist mittels eines Freilaufs mit einem Abtriebselement des Fahrrads mechanisch wirkverbindbar ist, wobei das Abtriebselement ein hinteres Laufrad des Fahrrads ist. Die Motorwelle des Antriebsmotors ist mittels des Freilaufs mit dem Hinterrad mechanisch wirkverbindbar. Eine Drehzahl des Antriebsmotors muss deshalb zum Bereitstellen einer motorischen Antriebskraft und zum Unterstützen eines Benutzers bei einem Anschieben des Fahrrads mit dem Antriebsmotor mit einer Drehzahl des Hinterrads synchronisiert werden. Dies wird auch als Einspuren bezeichnet, wodurch dann der Freilauf in seinen Sperrzustand wechselt.

Das Verfahren weist als einen ersten Schritt 8 ein Aktivieren einer Schiebehilfe auf. Das Verfahren weist als einen zweiten Schritt 10 ein Bestimmen eines variablen Solldrehzahlgradienten für den Antriebsmotor auf. Das Bestimmen des variablen Solldrehzahlgradienten erfolgt in Abhängigkeit von einem Vergleich der Motordrehzahl mit einer Synchrondrehzahl und in Abhängigkeit von dem gewählten Betriebsmodus. Je größer dabei eine Differenz der Motordrehzahl zu der Synchrondrehzahl ist, desto größer wird der variable Solldrehzahlgradient bestimmt. Die Synchrondrehzahl ist dabei die Drehzahl, welche die Motorwelle für das Einspuren aufweisen muss. Die Synchrondrehzahl ergibt sich aus der Drehzahl des Hinterrads multipliziert mit einer derzeitigen Übersetzung zwischen dem Hinterrad und der Motorwelle. Das Bestimmen des variablen Solldrehzahlgradienten erfolgt in dem gezeigten Beispiel in diskreten Intervallen. In anderen Ausführungsformen erfolgt die Bestimmung des variablen Solldrehzahlgradienten kontinuierlich oder mit einer Frequenz einer die Bestimmung durchführenden Steuervorrichtung. In einem Schritt 12 erfolgt ein Steuern des Antriebsmotors in Abhängigkeit von dem bestimmten variablen Solldrehzahlgradienten, um eine Motordrehzahl an eine Synchrondrehzahl des Freilaufs anzunähern während die Schiebehilfe aktiviert ist.

In Fig. 2 ist die Synchrondrehzahl mit einer Linie 20 über die Zeit aufgetragen. Weiterhin ist die Motordrehzahl mit einer Linie 22 über die Zeit aufgetragen. Eine Steigung der Linie 22 bzw. der Motordrehzahl entspricht somit dem Drehzahlgradienten des Antriebsmotors. In einem ersten Bereich 30 steht der Antriebsmotor still, da das Anschieben des Fahrrads noch nicht erkannt wurde. Ein erster Wert des variablen Solldrehzahlgradienten wird in dem ersten Bereich 30 deshalb als null bestimmt. In einem zweiten Bereich 32 wird ein zweiter Wert für den variablen Solldrehzahlgradienten bestimmt und der Antriebsmotor entsprechend gesteuert. Aufgrund der großen Differenz zwischen einer Istdrehzahl des Antriebsmotors und der Synchrondrehzahl wird ein hoher Wert für den Solldrehzahlgradienten für den Antriebsmotor vorgegeben, was anhand der starken Steigung der Linie 22 in dem zweiten Bereich 32 zu erkennen ist. Die Motordrehzahl nähert sich der Synchrondrehzahl so schnell an. Am Ende des zweiten Bereichs 32 wird ein dritter Wert für den variablen Solldrehzahlgradienten in einem sich an den zweiten Bereich 32 anschließenden dritten Bereich 34 bestimmt. Dieser dritte Wert des variablen Solldrehzahlgradienten ist kleiner, da ein Abstand der Motordrehzahl zu der Synchrondrehzahl nun geringer ist. Dies ist anhand der mittleren Steigung der Linie 22 in dem dritten Bereich 34 zu erkennen. So kann weiterhin eine schnelle Annäherung an die Synchrondrehzahl erfolgen, wobei ein Risiko für ein ruckartiges Einspuren, beispielsweise aufgrund eines Verlangsamens des Schiebens durch den Benutzer, gering ist. Am Ende des dritten Bereichs 34 wird ein vierter Wert für den variablen Solldrehzahlgradienten in einem sich an den dritten Bereich 34 anschließenden vierten Bereich 36 bestimmt. Dieser vierte Wert des Solldrehzahlgradienten ist nochmal kleiner, da ein Abstand der Motordrehzahl zu der Synchrondrehzahl nun noch geringer ist. Dies ist anhand der geringen Steigung der Linie 22 in dem vierten Bereich 36 zu erkennen. So kann weiterhin eine sanfte Annäherung an die Synchrondrehzahl erfolgen, um ein ruckartiges Einspuren zuverlässig zu vermeiden. Je nach ausgewähltem Unterstützungsstufe bei der Schiebehilfe sind die Werte dabei unterschiedlich.

In einem sich an den vierten Bereich 36 anschließenden fünften Bereich 38 ist die Drehzahl, bei der der Freilauf sperrt, durch den Antriebsmotor erreicht. In dem fünften Bereich 38 wird also die Synchrondrehzahl erreicht. In Fig. 4 ist mit einer Linie 40 ein Zustand des Freilaufs über die Zeit aufgetragen, wobei bei einem Wert 42 der Freilauf in seinem Freigabezustand ist und bei einem Wert 44 in seinem Sperrzustand. In den ersten vier Bereichen 30, 32, 34, 36 befindet sich der Freilauf in seinem Freigabezustand. In dem fünften Bereich 38 wechselt der Freilauf in seinen Sperrzustand. Das somit erfolgte Einspuren wird erkannt und das Verfahren gemäß Fig. 1 beendet. Der Antriebsmotor wird dann mit einer üblichen Folgeregelung gesteuert, um die Synchrondrehzahl trotz schwankender Schiebegeschwindigkeit, welche in Fig. 2 anhand der gewellten Linie 20 zu erkennen ist, beizubehalten.

Alternativ oder zusätzlich zu der Bestimmung des variablen Solldrehzahlgradienten in Abhängigkeit von dem Vergleich der Motordrehzahl mit der Synchrondrehzahl wird in einer anderen Ausführungsform der variable Solldrehzahlgradient in Abhängigkeit von wenigstens einem Schieben des Fahrrads durch einen Benutzer in Schritt 10 bestimmt, wobei weiter die ausgewählte Unterstützungsstufe berücksichtigt wird. Dabei wird als Schieben ein Schiebekraft des Benutzers gegen einen Lenker des Fahrrads erfasst. Bei einer höheren Schiebekraft wird dann ein höherer Wert für den Solldrehzahlgradienten als bei einer niedrigeren Schiebekraft für den Antriebsmotor vorgegeben.

Fig. 3 veranschaulicht die Drehmomentsteuerung des Antriebsmotors in Schritt 10. Mit einer Linie 50 ist ein durch den Fahrradfahrer angefordertes Drehmoment über der Zeit aufgetragen, welches sich aus der Synchrondrehzahl und alternativ oder zusätzlich der Schiebekraft ergibt. Mit einer Linie 52 ist ein durch den Antriebsmotor erzeugtes Drehmoment über der Zeit aufgetragen, welches zumindest in den ersten vier Bereichen 30, 32, 34, 36 einer Drehmomentvorgabe für den Antriebsmotor folgt. In dem ersten Bereich 30 wird ein Drehmoment von null für den Motor vorgegeben. In dem zweiten Bereich 32 wird ein höchstes Drehmoment vorgegeben, damit der Antriebsmotor den hohen Solldrehzahlgradienten in dem zweiten Bereich 32 und damit eine hohe Beschleunigung erreichen kann. In dem dritten Bereich 34 wird ein mittleres Drehmoment vorgegeben, damit der Antriebsmotor den mittleren Solldrehzahlgradienten in dem dritten Bereich 32 und damit eine mittlere Beschleunigung erreicht. In dem vierten Bereich 36 wird ein geringes Drehmoment vorgegeben, damit der Antriebsmotor den geringen Solldrehzahlgradienten in dem vierten Bereich 32 und damit eine niedrige Beschleunigung erreicht. In dem fünften Bereich 38 gibt es einen sprungartigen Anstieg des Motormoments. Dieser sprunghafte Anstieg wird nicht durch eine hohe Drehmomentvorgabe verursacht, sondern dadurch, dass der Freilauf in seinen Sperrzustand wechselt. Eine Beschleunigung des Antriebsmotors erfordert dann ein wesentlich höheres Drehmoment und auch ein Halten der Synchrondrehzahl erfordert ein höheres Drehmoment, da der Antriebsmotor nun aufgrund des geschlossenen Freilaufs das Fahrrad mit antreibt. Dieser sprunghafte Anstieg wird erfasst und dazu benutzt, um den Wechsel des Freilaufs in den Sperrzustand zu erkennen und die Steuerung des Antriebsmotors mit dem Verfahren gemäß Fig. 1 zu beenden.

In Fig. 3 ist zudem für den zweiten Bereich 32 veranschaulicht, dass sich die Drehmomentvorgabe für den Antriebsmotor aus zwei Komponenten zusammensetzt. Das Steuern des Antriebsmotors in Abhängigkeit von dem variablen Solldrehzahlgradienten weist einen Vergleich eines Istdrehzahlgradienten des Antriebsmotors und dem variablen Solldrehzahlgradienten auf. Das Ergebnis dieses Vergleichs ist eine Differenz. In Abhängigkeit von dieser Differenz wird ein Regelwert für die Drehmomentvorgabe berechnet. Dieser Anteil der Drehmomentvorgabe ist in Fig. 3 mit dem Bereich 54 veranschaulicht. Durch die Regelung kann der Antriebsmotor besonders präzise zum Einhalten des bestimmten variablen Solldrehzahlgradienten gesteuert werden. Das Steuern des Antriebsmotors in Abhängigkeit von dem variablen Solldrehzahlgradienten weist zudem ein Vorgeben eines Motordrehmoments in Abhängigkeit von dem variablen Solldrehzahlgradienten auf. In Abhängigkeit von dem variablen Solldrehzahlgradienten wird ein Vorsteuerwert für die Drehmomentvorgabe berechnet. In dem gezeigten Beispiel korrespondiert der Vorsteueranteil linear zu dem derzeitigen Wert des variablen Solldrehzahlgradienten. Bei einem hohen Solldrehzahlgradienten wird entsprechend ein hoher Vorsteuerwert berechnet und bei einem geringen Solldrehzahlgradienten ein geringer Vorsteuerwert. Dieser Anteil der Drehmomentvorgabe ist in Fig. 3 mit dem Bereich 56 veranschaulicht. Eine Gesamtdrehmomentvorgabe berechnet sich als Summe des Vorsteuerwerts und des Regelwerts. Durch den Vorsteuerwert kann der variable Solldrehzahlgradient besonders schnell durch den Antriebsmotor erreicht werden. Durch die Kombination von Regelung und Vorsteuerung kann der variable Solldrehzahlgradient besonders schnell durch den Antriebsmotor erreicht werden und dann präzise beibehalten werden. In einer anderen Ausführungsform weist die Drehmomentvorgabe nur den Regelwert auf. Der Antriebsmotor wird dann nur drehmomentgeregelt. In noch einer anderen Ausführungsform weist die Drehmomentvorgabe nur den Vorsteuerwert auf. Der Antriebsmotor wird dann nur drehmomentvorgesteuert.

### Bezugszeichen

- 10: erster Schritt
- 12: zweiter Schritt
- 20: Linie / Synchrondrehzahl
- 22: Linie / Motordrehzahl
- 30: erster Bereich
- 32: zweiter Bereich
- 34: dritter Bereich
- 36: vierter Bereich
- 38: fünfter Bereich
- 40: Linie / Zustand des Freilaufs
- 42: Wert / Freigabezustand
- 44: Wert / Sperrzustand
- 50: Linie / angefordertes Drehmoment
- 52: Linie / erzeugtes Motordrehmoment
- 54: Anteil Regelwert Drehmomentvorgabe
- 56: Anteil Vorsteuerwert Drehmomentvorgabe

## Patentansprüche

1. Verfahren zum Steuern eines Antriebsmotors eines Fahrrads, wobei der Antriebsmotor mittels eines Freilaufs mit einem Abtriebselement des Fahrrads mechanisch wirkverbindbar ist und wobei das Verfahren wenigstens die folgenden Schritte aufweist:
- Aktivieren einer Schiebehilfe durch den Antriebsmotor;
- Bestimmen (10) eines variablen Solldrehzahlgradienten für den Antriebsmotor; und
- Steuern (12) des Antriebsmotors in Abhängigkeit von dem bestimmten variablen Solldrehzahlgradienten, um eine Motordrehzahl (22) an eine Synchrondrehzahl (20) des Freilaufs während eines Schiebens des Fahrrads anzunähern.

2. Verfahren nach Anspruch 1, **dadurch gekennzeichnet, dass**
der Freilauf in einer Nabe eines Laufrads des Fahrrads angeordnet ist.

3. Verfahren nach Anspruch 1 oder 2, **dadurch gekennzeichnet, dass** das Bestimmen (10) des variablen Solldrehzahlgradienten in Abhängigkeit von einem Vergleich der Motordrehzahl (22) mit der Synchrondrehzahl (20) erfolgt.

4. Verfahren nach einem der vorhergehenden Ansprüche, **dadurch gekennzeichnet, dass** das Bestimmen (10) des variablen Solldrehzahlgradienten in Abhängigkeit von wenigstens einem Schieben des Fahrrads durch einen Benutzer erfolgt.

5. Verfahren nach Anspruch 4, **dadurch gekennzeichnet, dass** das Schieben ein durch den Benutzer aufgebrachte Schiebekraft aufweist.

6. Verfahren nach einem der vorhergehenden Ansprüche, **dadurch gekennzeichnet, dass** das Steuern (12) des Antriebsmotors in Abhängigkeit von dem variablen Solldrehzahlgradienten einen Vergleich (54) eines Istdrehzahlgradienten des Antriebsmotors und dem variablen Solldrehzahlgradienten aufweist.

7. Verfahren nach einem der vorhergehenden Ansprüche, **dadurch gekennzeichnet, dass** das Steuern (12) des Antriebsmotors in Abhängigkeit von dem variablen Solldrehzahlgradienten ein Vorgeben (56) eines Motordrehmoments (52) in Abhängigkeit von dem variablen Solldrehzahlgradienten aufweist.

8. Steuervorrichtung für einen Antriebsmotor eines Fahrrads, wobei der Antriebsmotor mittels eines Freilaufs mit einem Abtriebselement des Fahrrads mechanisch wirkverbindbar ist, wobei die Steuervorrichtung dazu ausgebildet ist, einen variablen Solldrehzahlgradienten für den Antriebsmotor in Abhängigkeit von dem ausgewählten Betriebsmodus zu bestimmen (10) und den Antriebsmotor in Abhängigkeit von dem bestimmten Solldrehzahlgradienten zu steuern (12), um eine Motordrehzahl (22) an eine Synchrondrehzahl (20) des Freilaufs anzunähern wenn eine Schiebehilfe aktiviert ist.

9. Fahrrad mit einem Antriebsmotor, einem Abtriebselement und einem Freilauf, wobei der Antriebsmotor mittels des Freilaufs mit dem Abtriebselement des Fahrrads mechanisch wirkverbindbar ist, eine Bedienvorrichtung, welche für eine Aktivierung einer Schiebehilfe ausgebildet ist, und einer Steuervorrichtung, wobei die Steuervorrichtung dazu ausgebildet ist, einen variablen Solldrehzahlgradienten für den Antriebsmotor zu bestimmen (10) und den Antriebsmotor in Abhängigkeit von dem bestimmten Solldrehzahlgradienten zu steuern (12), um eine Motordrehzahl (22) an eine Synchrondrehzahl (20) des Freilaufs anzunähern, wenn die Schiebehilfe aktiviert ist.
